# EUROPÄISCHE PATENTSCHRIFT

(11) **EP 3 325 855 B1**
(45) Veröffentlichungstag und Bekanntmachung des Hinweises auf die Patenterteilung: **02.09.2020**
(21) Anmeldenummer: 16731838.5
(22) Anmeldetag: 16.06.2016
(51) Int. Cl.: F16J 9/14, F16J 9/20, F16J 9/26

(54) **KOLBENRING**
PISTON RING
SEGMENT DE PISTON

(30) Priorität: 17.07.2015 DE 102015111672
(43) Veröffentlichungstag der Anmeldung: 30.05.2018
(73) Patentinhaber: Federal-Mogul Burscheid GmbH, 51399 Burscheid (DE)
(72) Erfinder: GILLEN, Jürgen, 51371 Leverkusen (DE); WOLFRAM, Eugen, 42659 Solingen (DE)
(74) Vertreter: Becker & Kurig Partnerschaft Patentanwälte PartmbB
(86) Internationale Anmeldenummer: PCT/EP2016/063882
(87) Internationale Veröffentlichungsnummer: WO 2017/012796

(56) Entgegenhaltungen:
- DE-B3- 10 322 032
- DE-C1- 19 939 002
- DE-C1- 19 944 453
- JP-U- S5 676 145
- US-A- 2 511 874

## Beschreibung

Die vorliegende Erfindung betrifft einen verbesserten Kolbenring einer Hubkolben-Verbrennungskraftmaschine, insbesondere einen Topring mit optimierter Gestaltung.

Durch die motorische Druckbelastung des Toprings und unter Berücksichtigung der Kolbenbiegung unter Zünddruck entsteht Axialverschleiß der Kolbennuten und Kolbenringflanken. Die Verschleißcharakteristik ist gekennzeichnet durch Verschleißzunahme zum Außendurchmesser hin. Dabei wandert der Kontaktpunkt zwischen Kolbenring und Zylinderoberfläche immer weiter in den oberen Bereich der Lauffläche. Durch die hydrodynamischen Einflüsse verringert sich die Abstreifwirkung des Toprings (die Abstreifkante wird von der Zylinderwand abgehoben) in der Abwärtsbewegung, das Schmieröl bleibt an der Zylinderwand zurück und der Ölverbrauch steigt.

Stand der Technik ist eine asymmetrische Balligkeit oder Minutenform an der Lauffläche des Kolbenrings. Die Lage des Scheitelpunktes (der auch als Pivotpunkt bezeichnet wird) dieser Kolbenringe wird in der ISO 6623:2004 definiert und liegt unterhalb des Kolbenringschwerpunktes: die Entfernung des Scheitelpunkts von der Topflanke ist größer als die halbe Höhe des Kolbenrings, oder mit anderen Worten der Scheitelpunkt liegt unterhalb der vertikalen Mitte des Kolbenrings. DE 199 44 453 C1 und DE 103 22 032 B3 offenbaren bekannten Kolbenringe.

### Kurze Beschreibung der Erfindung

Gemäß der vorliegenden Erfindung wird ein Kolbenring einer Hubkolben-Verbrennungskraftmaschine mit den Merkmalen des Anspruchs 1 bereitgestellt; bevorzugte Ausführungsformen sind in den abhängigen Ansprüchen definiert.

Gemäß einem ersten Aspekt der Erfindung wird ein Kolbenring einer Hubkolben-Verbrennungskraftmaschine bereitgestellt, umfassend:
- einen Ringkörper mit offenem Stoß, einer radial äußeren Laufflächenseite, einer radial inneren Umfangsseite sowie zwei axial gegenüberliegenden Flankenseiten;
- eine zumindest teilweise Beschichtung auf der Laufflächenseite; und
- eine umlaufende Aussparung im unteren Bereich der Lauffläche, die außerhalb des Stoßbereichs endet;
wobei die Laufflächenseite ein balliges Profil mit einem Pivotpunkt aufweist, der auf 55-80% der axialen Höhe des Kolbenrings angeordnet ist.

Der Pivotpunkt ist somit oberhalb der Mitte (in axialer Richtung) des Kolbenrings angeordnet. Durch diese gezielte Verschiebung der Scheitelpunkts- bzw. Pivotpunktlage in Richtung der oberen Ringflanke (Topflanke) kann gegenüber bekannten Kolbenringen mit Pivotpunkt unterhalb der Mitte eine Entlastung der Unterflanke des Kolbenringes am Außendurchmesser erreicht werden. Aufgrund der auf den Kolbenring im Motorbetrieb einwirkenden Kräfte wird eine Drehung im Uhrzeigersinn induziert, wohingegen herkömmliche Kolbenring mit untermittigem Pivotpunkt die Tendenz aufweisen, eine Drehung im Gegenuhrzeigersinn auszuführen. Der erfindungsgemäße Kolbenring bewirkt daher eine verbesserte Ölabstreifwirkung und einen verminderten Verschleiß.

Um den Aufbau eines hydrodynamischen Druckes unterhalb des Scheitelpunktes zu vermeiden, der die Ölabstreifkante von der Zylinderwand abhebt, ist eine gezielte Formgebung in Form der umlaufenden Aussparung vorgesehen. Um Blow-By-Verluste möglichst gering zu halten, endet die Aussparung bereits in einem gewissen Abstand vor dem Stoß, so dass im Stoßbereich keine Aussparung vorliegt.

Gemäß einer Ausführungsform erstreckt sich der Stoßbereich in einem Bereich von 0,003-0,2 % der Umfangslänge des Kolbenrings, jeweils von dem Stoß aus. Oder mit anderen Worten, die Aussparung beginnt in einer Entfernung vom Stoß, die 0,003-0,2 % der Umfangslänge des Kolbenrings entspricht.

Gemäß einer Ausführungsform ist der Pivotpunkt des balligen Laufflächenprofils auf 60-70% der axialen Höhe des Kolbenrings angeordnet. Diese Ausführungsform eignet sich besonders für Kolbenringe mit geringer axialer Höhe, etwa weniger als 3 mm.

Gemäß einer Ausführungsform weist die radial innere Umfangsseite ein bezüglich der axialen Mitte im Wesentlichen symmetrisches Profil auf. In einer einfachen Ausführung ist die innere Umfangsseite im Querschnitt im Wesentlichen eben.

Gemäß einer Ausführungsform beträgt die axiale Ringhöhe mindestens 3 mm.

Gemäß einer Ausführungsform läuft die radiale Tiefe der Aussparung zum Stoßbereich hin aus.

Gemäß einer Ausführungsform bedeckt die Beschichtung (B) auf der Laufflächenseite den Pivotpunkt oder sie spart ihn aus. Damit steht der Kolbenring am Scheitelpunkt entweder an der darauf aufgetragenen Beschichtung, oder alternativ an dem dort freiliegenden Grundkörper mit der Zylinderlauffläche in Kontakt. Die Beschichtung kann physikalisch oder galvanisch aufgetragen werden.

### Kurze Beschreibung der Zeichnungen

- Figur 1: zeigt einen herkömmlichen Kolbenring im Querschnitt;
- Figur 2: zeigt schematisch eine erste Ausführungsform eines erfindungsgemäßen Kolbenrings im Querschnitt;
- Figur 3: zeigt einen ersten Bereich eines erfindungsgemäßen Kolbenrings im Querschnitt;
- Figur 4: zeigt einen zweiten Bereich des Kolbenrings von Figur 3 im Querschnitt;
- Figur 5: zeigt einen ersten Bereich einer weiteren Ausführungsform eines erfindungsgemäßen Kolbenrings im Querschnitt;
- Figur 6: zeigt einen zweiten Bereich des Kolbenrings von Figur 5 im Querschnitt; und
- Figur 7: zeigt eine Aufsicht auf den Stoßbereich eines erfindungsgemäßen Kolbenrings.

### Detaillierte Beschreibung der Erfindung

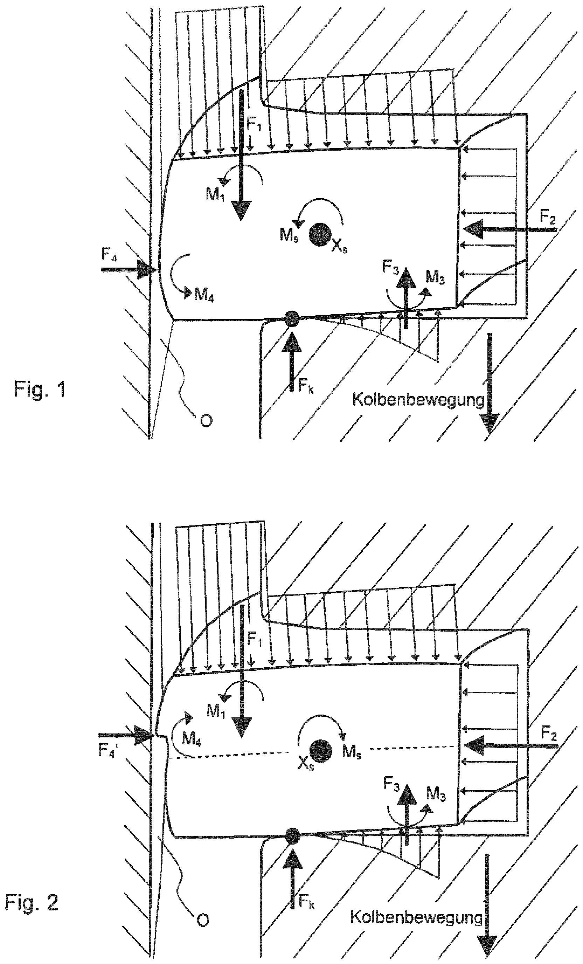

Figur 1 zeigt einen herkömmlichen Kolbenring gemäß dem bekannten Stand der Technik in einer Querschnittsansicht. Gezeigt ist die Situation während der Abwärtsbewegung des Kolbens im Arbeitstakt des betreffenden Motors. Eine Kraft F₁ resultiert aus der Einwirkung der Verbrennungsgase hauptsächlich am Außendurchmesser des Kolbenrings. Diese erzeugt ein Moment M₁ im Gegenuhrzeigersinn.

Die durch die Verbrennung des Kraftstoffs erzeugte Gaskraft F₂ greift hier hinter dem Kolbenring, d.h. an dessen radial innerer Umfangsseite an. Physikalisch betrachtet wirkt die Flächenkraft als Einzelkraft im Flächenschwerpunkt der axialen Ringhöhe (siehe F₂) bei einer ebenen Innenseite also etwa in der Mitte derselben. Eine weitere Kraft F₃, die ebenfalls durch die Verbrennungsgase bewirkt wird, greift am Innendurchmesser des Kolbenrings an und erzeugt ein Moment M₃ im Gegenuhrzeigersinn.

Die Gegenkraft (siehe F₄) greift im Stand der Technik aufgrund des im unteren Bereich liegenden Pivotpunktes unterhalb des Flächenschwerpunktes Xₛ an, was zu einen Moment Mₛ gegen den Uhrzeigersinn führt und den Kolbenring zusätzlich mit der Reaktionskraft Fₖ, im Kontaktpunkt mit der unteren Kolbennut belastet. Dies führt verstärkt am Außendurchmesser der Kolbennut und des Kolbenringes zum Flankenverschleiß.

Aus dem Moment Mₛ im Gegenuhrzeigersinn resultiert einerseits die motorische Verschiebung des effektiven Scheitelpunktes in Richtung Brennraum und andererseits das Abheben der Abstreifkante von der Zylinderwand. Dies führt dazu, dass die Ölabstreifwirkung des Kolbenrings verringert wird, der verbleibende nicht abgestreifte Ölfilm wird dicker. Während des Verbrennungstaktes im Brennraum verbleibendes Öl wird mitverbrannt, was zu dem Ergebnis führt, dass der Ölverbrauch ansteigt sowie die Abgaswerte sich verschlechtern.

Zusammengefasst bestehen die Nachteile des herkömmlichen Kolbenringes daher in höherer Belastung des Kolbenrings, verstärktem Verschleiß und erhöhtem Ölverbrauch.

Figur 2 zeigt eine erste Ausführungsform eines erfindungsgemäßen Kolbenrings in einer Querschnittsansicht. Durch die erfindungsgemäße gezielte Verschiebung der Scheitelpunkts- bzw. Pivotpunktlage in Richtung zu oberen Ringflanke (Topflanke) wird eine Entlastung der Unterflanke des Kolbenringes am Außendurchmesser erreicht. Der Pivotpunkt befindet sich hier oberhalb der Mitte der Laufflächenseite,

Wie bei dem herkömmlichen Kolbenring aus Figur 1 greift die Kraft F₁ weiterhin hauptsächlich am Außendurchmesser des Kolbenrings an, und erzeugt das Moment M₁ im Gegenuhrzeigersinn. Ebenso greift die Gaskraft F₂ hier in der Mitte der Ringinnenseite an, so wie die Gaskraft F₃ am unteren Ringinnendurchmesser.

Im Gegensatz zu der Situation in Figur 1 greift jedoch die Gegenkraft F4' aufgrund der Versetzung des Pivotpunkts in die obere Hälfte des Kolbenrings hier oberhalb der Mitte der Laufflächenseite an. Daraus resultiert ein Moment Mₛᵤ um den Flächenschwerpunkt Xₛ im Uhrzeigersinn. Dadurch wird - aufgrund der Verringerung der Reaktionskraft Fₖ - der Verschleiß an der unteren Kolbenringflanke und an der anliegenden unteren Kolbenringnut verringert.

Des Weiteren wird so verhindert, dass die Abstreifkante des Kolbenrings von der Zylinderinnenseite abhebt und die Ölabstreifwirkung vermindert wird. Im Gegensatz zum herkömmlichen Kolbenring mit einer Verdrehung im Gegenuhrzeigersinn wird daher über die Laufzeit der Ölverbrauch verringert.

Da die Ölabstreifkante des Kolbenrings nicht von der Zylinderinnenseite abhebt, könnte es jedoch zur Ausbildung eines hydrodynamischen Drucks aufgrund des sich an der Abstreifkante ansammelnden Öls O kommen (siehe Situation bei Fig. 1), der wiederum ein Moment im Gegenuhrzeigersinn verursachen würde. Erfindungsgemäß ist daher eine gezielte Formgebung vorgesehen, um diesen Effekt zu vermeiden. Bei dem erfindungsgemäßen Kolbenring wird im unteren Bereich der Laufflächenseite eine umlaufende Aussparung vorgesehen, wie in Figur 2 zu sehen.

Da es am Stoß jedoch dadurch verstärkt zum Durchtritt von Blow-By-Gasen käme, läuft erfindungsgemäß diese Aussparung bereits vor dem Stoß aus bzw. wird zum Stoß hin in eine herkömmliche, nicht ausgesparte Form überführt. Dies wird in den folgenden Figuren gezeigt.

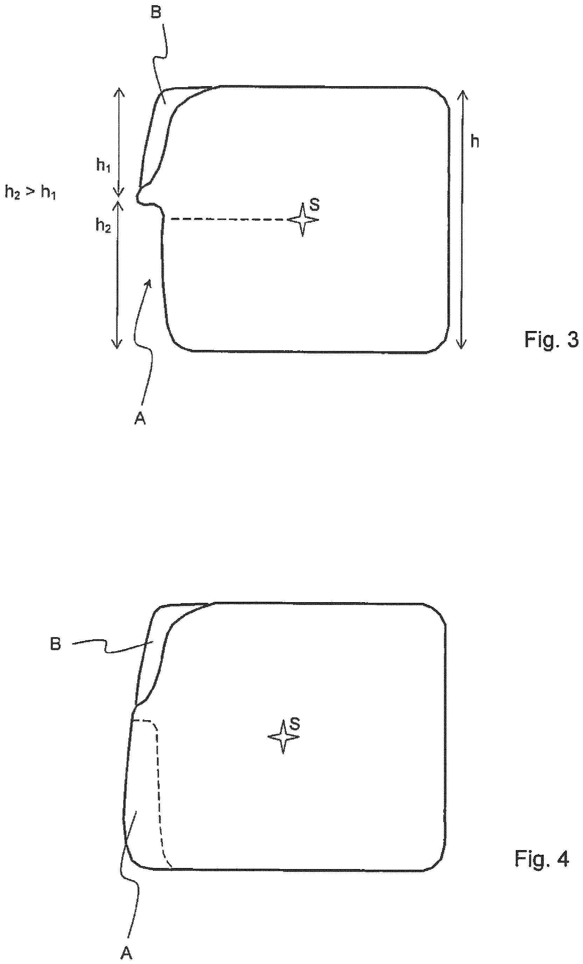

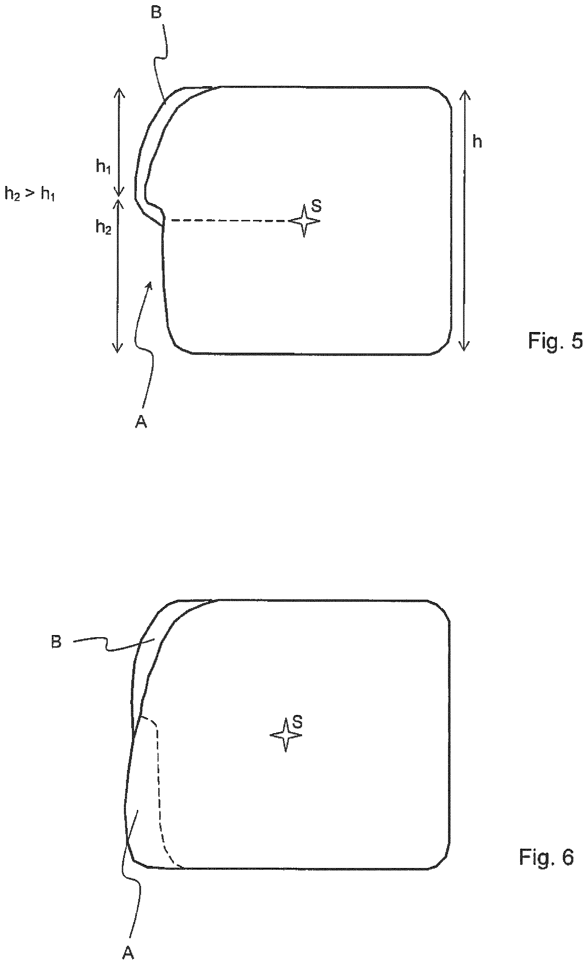

Figur 3 zeigt einen ersten Bereich eines erfindungsgemäßen Kolbenrings im Querschnitt. Dabei handelt es sich um einen Bereich außerhalb des Stoßbereichs, beispielweise den Ringrückenbereich gegenüber dem Stoß. Eine Aussparung A ist in diesem Bereich vorgesehen. Dabei sollte die Aussparung A an der Laufflächenseite ein Maß von 20 bis 40% der axialen Ringhöhe haben. In Betracht kommen aber auch Werte von 10 bis 60%. Auf der Lauffläche befindet sich eine galvanisch oder physikalisch abgeschiedene Beschichtung B (die in Fig. 2 nicht separat gezeigt ist). Der Scheitelpunkt selbst ist in dieser Ausführungsform nicht von der Beschichtung abgedeckt, in alternativen Ausführungsformen (siehe beispielsweise Figur 5 und 6) kann sich die Beschichtung aber auch darüber erstrecken.

Idealerweise sollte der Scheitelpunkt (an dem F₄ angreift) in einem Bereich der Höhe h₂ von 60 bis 70% der axialen Ringhöhe h liegen (h₂ = 60 bis 70% von h), ebenfalls möglich ist aber auch ein Bereich von 55 bis 80%, insbesondere bei Ringhöhen größer 3 mm. Der Scheitelpunkt liegt damit oberhalb des Flächenschwerpunkts S.

Figur 4 zeigt einen zweiten Bereich eines erfindungsgemäßen Kolbenrings im Querschnitt. Dabei handelt es sich um einen Bereich im Stoßbereich. Um das Entweichen von Blow-By-Gasen zu minimieren, ist die Aussparung A (hier gestrichelt dargestellt) bereits vor dem Stoßbereich ausgelaufen, bzw. der Querschnitt des dargestellten Kolbenrings wird zum Stoßbereich hin in eine herkömmliche, nicht ausgesparte Form überführt.

Die Figuren 5 und 6 zeigen eine alternative Ausführungsform zu der, die in den Figuren 3 und 4 gezeigt ist. Abweichend davon ist der Scheitelpunkt in dieser Ausführungsform von der Beschichtung abgedeckt, d.h. der Scheitelpunkt liegt in der Beschichtung bzw. der Kontakt zur Zylinderlauffläche besteht über die Beschichtung, wohingegen bei der Ausführungsform in den Figuren 3 und 4 am Scheitelpunkt der freiliegende Grundkörper mit der Zylinderlauffläche in Kontakt steht.

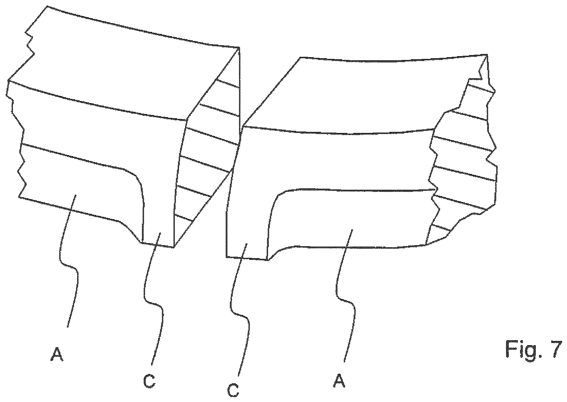

Figur 7 zeigt in einer Aufsicht auf den Stoßbereich eines erfindungsgemäßen Kolbenrings, wie in einer Ausführungsform das Auslaufen der Aussparung gestaltet sein kann. Am Stoß selbst sowie einem unmittelbar angrenzenden Bereich C ist erfindungsgemäß keine Aussparung im unteren Laufflächenbereich vorhanden. Die Aussparung beginnt erst ab einem Abstand zum Stoß. In einem Übergangsbereich zwischen Stoßbereich und vollständig ausgespartem Bereich vergrößert bzw. verringert sich die Tiefe in einem stetigen Verlauf, dessen Steilheit und/oder Rundung den Anforderungen gemäß ausgelegt werden kann.

## Patentansprüche

1. Kolbenring einer Hubkolben-Verbrennungskraftmaschine, umfassend:
- einen Ringkörper mit offenem Stoß, einer radial äußeren Laufflächenseite, einer radial inneren Umfangsseite sowie zwei axial gegenüberliegenden Flankenseiten;
- eine zumindest teilweise Beschichtung (B) auf der Laufflächenseite; und
- eine umlaufende Aussparung (A) im unteren Bereich der Lauffläche, die außerhalb des Stoßbereichs (C) endet;
wobei die Laufflächenseite ein balliges Profil mit einem Pivotpunkt aufweist, der auf einer Höhe *h₂* von 55-80% der axialen Höhe *h* des Kolbenrings angeordnet ist und sich in der oberen Hälfte des Kolbenrings befindet, und
wobei die Aussparung (A) an der Laufflächenseite ein Maß von 20 bis 40% der axialen Höhe *h* des Kolbenrings aufweist und den unteren Bereich der Lauffläche und den Kolbenrings definiert.

2. Kolbenring nach Anspruch 1, wobei sich der Stoßbereich (C) in einem Bereich von 0,003-0,2 % der Umfangslänge des Kolbenrings erstreckt, jeweils von dem Stoß aus.

3. Kolbenring nach Anspruch 1 oder 2, wobei der Pivotpunkt des balligen Laufflächenprofils auf 60-70% der axialen Höhe h des Kolbenrings angeordnet ist.

4. Kolbenring nach einem der vorhergehenden Ansprüche, wobei die radial innere Umfangsseite ein bezüglich der axialen Mitte im Wesentlichen symmetrisches Profil aufweist.

5. Kolbenring nach einem der vorhergehenden Ansprüche, wobei die axiale Ringhöhe h mindestens 3 mm beträgt.

6. Kolbenring nach einem der vorhergehenden Ansprüche, wobei die radiale Tiefe der Aussparung (A) zum Stoßbereich hin ausläuft.

7. Kolbenring nach einem der vorhergehenden Ansprüche, wobei die Beschichtung (B) auf der Laufflächenseite den Pivotpunkt bedeckt oder ausspart.

## Claims

1. A piston ring of a reciprocating internal combustion engine, comprising:
- an annular body with an open joint, a radially-outer running face, a radially-inner circumferential face and two axially opposed flank faces;
- an at least partial coating (B) on the running face; and
- a circumferential recess (A) in the lower region of the running surface, which ends outside of the joint region (C); wherein
the running face has a crowned profile with a pivot point that is arranged at a height h₂ of 55 - 80% of the axial height h of the piston ring and is located in the upper half of the piston ring, and wherein
the recess A on the running face has a dimension of 20 to 40% of the axial height h of the piston ring and defines the lower region of the running face and the piston ring.

2. The piston ring in accordance with claim 1, wherein
the joint region (C) extends over a range of 0.003 - 0.2 % of the circumferential length of the piston ring, in each case from the joint.

3. The piston ring in accordance with claim 1 or 2, wherein
the pivot point of the crowned running surface profile is arranged at 60 - 70% of the axial height h of the piston ring.

4. The piston ring in accordance with one of the preceding claims, wherein
the radially-inner circumferential face has a substantially symmetrical profile with respect to the axial centre.

5. The piston ring in accordance with one of the preceding claims, wherein
the axial height h of the ring is at least 3 mm.

6. The piston ring in accordance with one of the preceding claims, wherein
the radial depth of the recess (A) runs out towards the joint region.

7. The piston ring in accordance with one of the preceding claims, wherein
the coating (B) on the running face covers or reveals the pivot point.

## Revendications

1. Segment de piston d'un moteur à combustion interne à mouvement alternatif, comprenant :
- un corps annulaire avec une jonction ouverte, un côté surface de glissement radialement extérieur, un côté circonférentiel radialement intérieur et deux côtés latéraux axialement opposés ;
- un revêtement (B) au moins partiel du côté de la surface de glissement ; et
- un renfoncement circonférentiel (A) dans la partie inférieure de la surface de glissement se terminant en dehors de la zone de jonction (C) ;
le côté surface de glissement ayant un profil bombé avec un point de pivot agencé à une hauteur *h₂* de 55 à 80 % de la hauteur axiale h du segment de piston et situé dans la moitié supérieure du segment de piston, et
le renfoncement (A) du côté de la surface de glissement ayant une dimension de 20 à 40 % de la hauteur axiale *h* du segment de piston et définissant la partie inférieure de la surface de glissement et du segment de piston.

2. Segment de piston selon la revendication 1, dans lequel la zone de jonction (C) s'étend dans une gamme allant de 0,003 à 0,2 % de la longueur circonférentielle du segment de piston, dans chaque cas à partir de la jonction.

3. Segment de piston selon la revendication 1 ou la revendication 2, dans lequel le point de pivot du profil bombé est agencé à 60-70% de la hauteur axiale h du segment de piston.

4. Segment de piston selon l'une des revendications précédentes, dans lequel le côté périphérique radialement intérieur a un profil sensiblement symétrique par rapport au centre axial.

5. Segment de piston selon l'une des revendications précédentes, dans lequel la hauteur axiale *h* du segment est d'au moins 3 mm.

6. Segment de piston selon l'une des revendications précédentes, dans lequel la profondeur radiale du renfoncement (A) s'amincit vers la zone de jonction.

7. Segment de piston selon l'une des revendications précédentes, dans lequel le revêtement (B) sur le côté de la surface de glissement recouvre ou non le point de pivot.
